(19) **Europäisches Patentamt / European Patent Office / Office européen des brevets**

(11) **EP 2 033 519 A1**

(12) ## EUROPÄISCHE PATENTANMELDUNG

(43) Veröffentlichungstag:
**11.03.2009 Patentblatt 2009/11**

(51) Int Cl.:
*A01N 43/40* *(2006.01)*      *A01N 43/80* *(2006.01)*

(21) Anmeldenummer: 08162324.1

(22) Anmeldetag: **20.08.2001**

(84) Benannte Vertragsstaaten:
**AT BE CH CY DE DK ES FI FR GB GR IE IT LI LU MC NL PT SE TR**

(30) Priorität: **21.08.2000 DE 10040814**

(62) Dokumentnummer(n) der früheren Anmeldung(en) nach Art. 76 EPÜ:
**06005869.0 / 1 671 542**
**01971931.9 / 1 313 368**

(71) Anmelder: **THOR GmbH**
**67346 Speyer (DE)**

(72) Erfinder:
• **Antoni-Zimmermann, Dagmar**
**67346 Speyer (DE)**

• **Baum, Rüdiger**
**68753 Waghäusel (DE)**
• **Wunder, Thomas, Dr.**
**67435 Neustadt (DE)**
• **Schmidt, Hans-Jürgen**
**67346 Speyer (DE)**

(74) Vertreter: **Huhn, Michael**
**Isenbruck Bösl Hörschler Wichmann Huhn LLP**
**Patentanwälte**
**Theodor-Heuss-Anlage 12**
**68165 Mannheim (DE)**

Bemerkungen:
Diese Anmeldung ist am 13-08-2008 als Teilanmeldung zu der unter INID-Code 62 erwähnten Anmeldung eingereicht worden.

(54) **Synergistische Biozidzusammensetzung mit Pyrithion, Octylisothiazolinonen und Herbiziden**

(57) Angegeben wird eine Biozidzusammensetzung als Zusatz zu Stoffen, die von schädlichen Mikroorganismen befallen werden können. Sie ist dadurch gekennzeichnet, dass sie als biozide Wirkstoffe (a) ein oder mehrere Pyrithione und (b) 2-n-Octylisothiazolin-3-on und/ oder 4,5-Dichlor-2-n-octylisothiazolin-3-on enthält und (c) ein oder mehrere Herbizide. Die biozeden Komponenten der Zusammensetzung wirken synergistisch, so dass sie in relativ kleinen Mengen eingesetzt werden können.

EP 2 033 519 A1

**Beschreibung**

Die Erfindung betrifft eine Biozidzusammensetzung als Zusatz zu Stoffen, die von schädlichen Mikroorganismen befallen werden können, mit einem Gehalt an einem Pyrithion als biozidem Wirkstoff. Insbesondere bezieht sich die Erfindung auf eine Biozidzusammensetzung, die als algizides und fungizides Mittel zum Konservieren von technischen Gegenständen und Materialien geeignet ist.

Biozide Zusammensetzungen werden in vielen Bereichen eingesetzt, beispielsweise zur Bekämpfung von schädlichen Algen, Pilzen und Bakterien. Zu den zahlreichen bioziden Wirkstoffen gehören z.B. auch Zink- und Natriumpyrithion, wie aus der US 5562995 und der US 5883154 ersichtlich ist. Die erste Druckschrift betrifft unter anderem das Vermeiden einer unerwünschten Verfärbung in einem wässrigen antimikrobiellen Gemisch, das sowohl Eisen- oder Kupferionen als auch Pyrithion als einen antimikrobiellen Wirkstoff enthält. Die Vermeidung einer Verfärbung erfolgt durch Zusatz von Zinkionen. Die zweite Druckschrift bezieht sich unter anderem auf das Verhindern oder Beseitigen einer unerwünschten Verfärbung eines antimikrobiellen Gemisches mit einem Gehalt an einem Harz, an Eisen- oder Kupferionen und an Pyrithion durch Zusatz von Zinkionen.

Ferner wurde über die biozide Wirkung von 2-n-Octylisothiazolin-3-on berichtet, das gemäß der EP-0676140-A1 beispielsweise im Gemisch mit Methylisothiazolin-3-on eingesetzt wird.

Auch ist 4,5-Dichlor-2-n-octyl-4-isothiazolin-3-on als Fungizid im Handel erhältlich, beispielsweise unter der Bezeichnung "Rozone® 2000" von Rohm and Haas Company oder unter der Bezeichnung "ACTICIDE®" DT von Thor GmbH.

Aus der Japanischen Patentanmeldung 1992/353836 ist eine mikrobizide Zusammensetzung bekannt, die Zink-2-pyridinthiol-1-oxid, also Zinkpyrithion, und beispielsweise 3-Iod-2-propinylbutylcarbamat enthält.

Ferner ist in der Japanischen Patentanmeldung 1993/99195 ein Textilmaterial beschrieben, das mit einem Mittel zur Bekämpfung des Pilzwachstums auf den Textilfasern ausgerüstet ist. Dieses Mittel enthält den 3-Iod-2-propinylester der N-n-Butylcarbaminsäure, also 3-Iod-2-propinyl-N-butylcarbamat, und beispielsweise Bis(2-pyridylthio-1-oxidono)-zink, also Zinkpyrithion.

Auch sind in der US 5464622 antimikrobielle Zusammensetzungen angegeben, die das Zinksalz des 2-Mercaptopyridin-N-oxids, also Zinkpyrithion, und Iodpropargylbutylcarbamat enthalten.

Schließlich betrifft die WO 98/21962 algizide Zusammensetzungen, die ein Gemisch aus Zinkpyrithion und einer Halogenpropinylverbindung, z.B. 3-Iod-2-propinylbutylcarbamat, enthält.

Im vorgenannten Stand der Technik gibt es keinen Hinweis auf Zusammensetzungen, die neben Zinkpyrithion noch ein Octylisothiazolin-3-on aufweisen.

Die bekannten Biozidzusammensetzungen, welche einen der vorgenannten bioziden Wirkstoffe enthalten, sind für bestimmte Anwendungszwecke noch nicht befriedigend. Dies gilt insbesondere bei ihrem Einsatz als Konservierungsmittel für die biozide Ausrüstung von Gegenständen oder Beschichtungen, deren Oberflächen erfahrungsgemäß häufig von Algen oder Pilzen befallen werden. Ein Algen- oder Pilzbefall macht Oberflächen nicht nur optisch unansehnlich, sondern kann auch zur Materialschädigung und zur Verkürzung der Gebrauchsdauer der entsprechenden Gegenstände und Oberflächen führen. Der mikrobielle Befall von Gegenständen oder von darauf aufgebrachten Beschichtungen tritt vor allem an Stellen mit hoher Feuchtigkeit auf, sowohl im Innenbereich, z.B. in Gebäuden der Lebensmittelindustrie, von Molkereien oder Brauereien, als auch im Außenbereich, vor allem an Gebäuden, die ungünstigen Witterungsbedingungen ausgesetzt sind, beispielsweise an Gebäudeseiten mit fehlender Sonneneinstrahlung. Insbesondere sind Beschichtungen, die einen der vorgenannten bioziden Wirkstoffe enthalten, gegen Besiedelung durch beispielsweise Alternaria-Arten oder andere Pilze aus der Gruppe der sogenannten "Schwärzepilze" zu wenig beständig. Einerseits führt der mikrobielle Bewuchs zu einer optischen Beeinträchtigung und einer damit einhergehenden Verfärbung. Andererseits neigen verschiedene biozide Wirkstoffe unter der Einwirkung von UV-Strahlung zu Verfärbungen.

Schließlich ist es erwünscht, mit den Wirkstoffen einerseits eine möglichst starke biozide Wirkung zu erzielen und andererseits dafür nur relativ kleine Mengen der Wirkstoffe einsetzen zu müssen.

Der Erfindung liegt daher die Aufgabe zugrunde, eine Biozidzusammensetzung anzugeben, die dadurch verbessert ist, dass ihre Komponenten in den vorgenannten technischen Materialien und Gegenständen, insbesondere in Beschichtungssystemen, wie Anstrichfarben, Lacken und Putzen, synergistisch zusammenwirken und deshalb in geringeren Konzentrationen als im Falle der Einzelkomponenten zum Schutz gegen Befall und Zerstörung durch Mikroorganismen verwendet werden können. Vorzugsweise soll die Biozidzusammensetzung gegen Bakterien, Pilze und Algen wirksam sein, insbesondere gegen Schimmelpilze, Hefen, holzzerstörende und holzverfärbende Pilze sowie Algen, ferner im Antifoulingbereich gegen relevante marine Organismen, wie Balus, Ascidia, Serpula, Mytilus, Spirorbis, Bugula und Hydrazoa. Dabei soll die Biozidzusammensetzung eine Wirksamkeit gegenüber Alternaria-Species und anderen Pilzen aus der Gruppe der sogenannten "Schwärzepilze" aufweisen und auch gegen eine Verfärbung durch Einwirkung von UV-Licht und Wärme möglichst stabil sein.

Diese Aufgabe löst die Erfindung durch eine Biozidzusammensetzung der eingangs genannten Art, die gemäß einer ersten Ausführungsform dadurch gekennzeichnet ist, dass sie als biozide Wirkstoffe nur (a) ein oder mehrere Pyrithione und (b) 2-n-Octylisothiazolin-3-on und/oder 4,5-Dichlor-2-n-octylisothiazolin-3-on enthält. Gemäß einer zweiten Ausführungsform ist die Biozidzusammensetzung dadurch gekennzeichnet, dass sie als biozide Wirkstoffe nur (a) ein oder mehrere Pyrithione, (b) 2-n-Octylisothiazolin-3-on und/oder 4,5-Dichlor-2-n-octylisothiazolin-3-on sowie (c) ein oder mehrere Herbizide enthält.

Die erfindungsgemäße Biozidzusammensetzung ist insbesondere als algizides und fungizides Mittel zur Konservierung von mikrobiell anfälligen technischen Materialien geeignet. Solche Materialien, die durch diese Biozidzusammensetzung vor mikrobieller Veränderung oder Zerstörung geschützt werden sollen, sind z.B. Beschichtungssysteme, wie Farben, Lacke, Putze oder Antifoulinganstriche, sowie Kunststoffgegenstände, Kühlschmiermittel, Wärmeübertragungsflüssigkeiten, Klebestoffe, Leime, Papiere, Kartone, Leder, Textilien und Holz.

Beispiele für Mikroorganismen, die technische Materialien und Gegenstände der vorgenannten Art besiedeln, sind Vertreter der folgenden Gattungen:

Alternaria, wie Alternaria alternata,
Aspergillus, wie Aspergillus niger,
Aureobasidium, wie Aureobasidium pullulans,
Chaetomium, wie Chaetomium globosum,
Coniophora, wie Coniophora puteana,
Cladosporium, wie Cladosporium cladosporoides,
Candida, wie Candida albicans,
Lentinus, wie Lentinus tigrinus,
Penicillium, wie Penicillium funiculosum,
Rhodotorula, wie Rhodotorula rubra,
Sclerophoma, wie Sclerophoma pityophila,
Trichoderma, wie Trichoderma viride,
Ulocladium, wie Ulocladium atrum,
Escherichia, wie Escherichia coli,
Pseudomonas, wie Pseudomonas aeruginosa,
Staphylococcus, wie Staphylococcus aureus.

Die erfindungsgemäße Biozidzusammensetzung, die sich insbesondere als Konservierungsmittel für Beschichtungssysteme eignet, weist folgende positive Eigenschaften auf:

a) gute algizide Wirkung;

b) gute fungizide Wirkung;

c) gute Wirksamkeit gegen Alternaria-Spezies und andere vergleichsweise schwer zu inaktivierende Problemkeime auf dem Gebiet der Konservierung, insbesondere der Filmkonservierung und des Materialschutzes, zum Beispiel bei Beschichtungen in Form von Anstrichfarben, Antifoulingfarben, Lacken und Putzen, und für den Schutz von Holz, Leder und Kunststoffen;

d) gute Beständigkeit auch bei hoher Auswaschbelastung sowie Belastung durch UV-Licht, Wärme, extreme Wetter- und Klimabedingungen sowie Wetterwechselbedingungen;

e) biozide Langzeitwirkung trotz geringer Konzentration der eingesetzten Biozidzusammensetzung;

f) geringe Toxizität gegenüber Menschen und Säugetieren;

g) sehr niedriger Dampfdruck der biozi den Wirkstoffe;

h) günstiges Verhältnis von Preis und Leistung.

Die erfindungsgemäße Biozidzusammensetzung zeichnet sich dadurch aus, dass darin das Gemisch mit einerseits einem oder mehreren Pyrithionen und andererseits 2-n-Octylisothiazolin-3-on und/oder 4,5-Dichlor-2-n-octylisothiazolin-3-on zu einer synergistischen bioziden Wirkung führt. Dies ermöglicht es beispielsweise, dass dann, wenn eine gute algizide Wirkung erwünscht ist, auf ein zusätzliches Algizid verzichtet werden kann.

Erfindungsgemäß liegt in der Biozidzusammensetzung das Pyrithion vorzugsweise in Form von Zink- oder Natriumpyrithion, insbesondere in Form von Zinkpyrithion, vor. Es können aber auch Kupfer- und Eisenpyrithion eingesetzt werden. Diese beiden letztgenannten Verbindungen weisen eine starke Eigenfärbung auf und eignen sich deshalb nur für spezielle Anwendungen, z.B. für eine Antifoulinganwendung.

Auch ist es günstig, wenn das Pyrithion in einer Konzentration von 0,1 bis 99,9 Gew. %, insbesondere von 0,5 bis 99,5 Gew.%, und das 2-n-Octylisothiazolin-3-on und/oder das 4,5-Dichlor-2-n-octylisothiazolin-3-on in einer Konzentration von 0,1 bis 99,9 Gew.%, jeweils bezogen auf die gesamte Biozidzusammensetzung, in der Zusammensetzung vorhanden sind.

Die erfindungsgemäße Biozidzusammensetzung enthält einerseits das Pyrithion und andererseits das 2-n-Octylisothiazolin-3-on und/oder das 4,5-Dichlor-2-n-octylisothiazolin-3-on vorzugsweise im Gewichtsverhältnis von 1:1000 bis 1000:1, insbesondere von 1:99 bis 99:1, besonders bevorzugt von 1:10 bis 10:1, ganz besonders bevorzugt von 1:3 bis 3:1.

Es ist zweckmäßig, die biociden Wirkstoffe der erfindungsgemäßen Zusammensetzung in Kombination mit einem polaren oder unpolaren flüssigen Medium in den mikrobiell anfälligen Systemen einzusetzen. Dabei kann dieses Medium beispielsweise in der Biozidzusammensetzung und/oder in dem zu konservierenden System vorgegeben sein.

Bevorzugte polare flüssige Medien sind Alkohole, Ester, Glykole, Glykolether, Glykolester und 2,2,4-Trimethyl-1,3-pentandiolmonoisobutyrat (erhältlich unter der Handelsbezeichnung "Texanol" von Eastman Chemical Company).

Bevorzugte unpolare flüssige Medien sind Aromaten, wie Alkylbenzole, z.B. Xylol und Toluol, Paraffine, unpolare Ester, wie Phthalate und Fettsäureester, epoxidierte Fettsäuren und deren Derivate sowie Silikonöle.

Die erfindungsgemäße Biozidzusammensetzung weist vorzugsweise einen pH-Wert im Bereich von 4 bis 10, insbesondere im Bereich von 6 bis 8, auf.

Die vorgenannten biociden Wirkstoffe, nämlich das Pyrithion, das z.B. in Form von Zink-, Natrium-, Kupfer- und/oder Eisenpyrithion vorliegt, sowie das 2-n-Octylisothiazolin-3-on und/oder das 4,5-Dichlor-2-n-octylisothiazolin-3-on sind bekannte Stoffe und können nach Verfahren gemäß dem Stand der Technik hergestellt werden.

Entsprechend der vorgenannten zweiten Ausführungsform kann die erfindungsgemäße Biozidzusammensetzung zusätzlich einen oder mehrere andere biozide Wirkstoffe in Form von Herbiziden enthalten, die in Abhängigkeit vom speziellen zu konservierenden System ausgewählt werden. Beispiele für solche Herbizide sind nachfolgend angegeben:

Acetochlor, Acifluorfen, Aclonifen, Acrolein, Alachlor, Alloxydim, Ametryn, Amidosulfuron, Amitrol, Ammoniumsulfat, Anilofos, Asulam, Atrazin, Aziprotryn, Benazolin, Benfluralin, Benfuresat, Bensulfuron, Bensulid, Bentazon, Chloridazon, Chlorimuron, Chlormethoxyfen, Chlornitrofen, Chloressigsäure, Chlorpikrin, Chlortoluron, Chlorxuron, Chlorprepham, Chlorsulfuron, Chlorthal, Chlorthiamid, Cinmethylin, Cinofulfuron, Clethodim, Clomazon, Clomeprop, Clopyralid, Cyanamid, Cyanazin, Cycloat, Cycloxydim, Benzofencap, Benzthiazuron, Bifenox, Bilanafos, Borax, Bromacil, Brombutid, Bromfenoxim, Bromxynil, Butachlor, Butamifos, Butanachlor, Butralin, Butylat, Carbetamid, CGA 184927, Chloramben, Chlorbromuron, Chlorbufam, Chlorflurenol, Difenoxuron, Difenzoquat, Diflufenican, Dimefuron, Dimepiperat, Dimethachlor, Dimethametryn, Dimethipin, Dimethylarsinsäure, Dinitramin, Dinosebacetat, Dinoseb, Dinoterb, Diphenamid, Dipropetryn, Diquat, Dithiopyr, Diuron, DNOC, PPX-A788, 2,4-D, Daimuron, Dalapon, Dazomet, 2,4-DB, Desmedipham, Desmetryn, Dicamba, Dichlobenil, Dichlorprop, Dichlorprop-P, Diclofop, Diethatyl, Flamprop-M, Flazasulfuron, Fluazifop, Fluazifop-P, Fluchloralin, Flumeturon, Fluorglycofen, Fluornitrofen, Flupropanat, Flurenol, Fluridon, Flurochloridon, Fluroxypyr, Fomosafen, Fusamin, Furyloxyfen, Glufosinat, Glyphosat, Haloxyfop, Hexazinon, Imazamethabenz, Imazapyr, Imazaquin, Imazethapyr, Ioxynil, Isopropalin, Isoproturon, Isouron, Isoxaben, Isoxapyrifop, Lactofen, Lenacil, Linuron, LS830556, MCPA, Pebulat, Pendimethalin, Pentachlorphenol, Pentanochlor, Erdölfraktionen, Phenmedipham, Picloram, Piperophos, Pretilachlor, Primisulfuron, Prodiamin, Proglinazin, Prometon, Prometryn, Propachlor, Propanil, Propaquizafop, Propazin, Propham, Propyzamid, Prosulfocarb, Pyrazolynat, Pyrazosulfuron, Pyrazoxyfen, Pyributicarb, Pyridat, Quinclorac, Quinmerac, Quinoclamin, Quizalofop, Quizalofop-P, S-23121, DPX-E96361, DSMA, Eglinazin, Endothal, Epsorcarb, EPTC, Ethalfluralin, Ethidimuron, Ethofumesat, Fenoxaprop, Fenoxaprop-P, Fenuron, Flamprop, Irgarol 1051, MCPA-thioethyl, MCPB, Mecoprop, Mecoprop-P, Mefenacet, Mefluidid, Metam, Metamitron, Metazachlor, Methabenzthiazuron, Methazol, Methoprotryn, Methyldymron, Methylisothiocyanat, Metobromuron, Metolachlor, Metoxuron, Metribzin, Metsulfuron, Molinat, Monoalid, Monolinuron, MSMA, Naproanilid, Napropamid, Naptalam, Neburon, Nicosulfuron, Nipyraclofen, Norflurazon, Orbencarb, Oryzalin, Oxadiazon, Oxyfluorfen, Paraquat, Prometryn, Simetryn, SMY 1500, Natriumchlorat, Sulfometuron, Teeröle, TCA, Tebutam, Tebuthiuron, Terbacil, Terbumeton, Terbuthylazin, Terbutryn, Thiazafluron, Thifensulfuron, Thiobencarb, Thiocarbazil, Tioclorim, Tralkoxydim, Triallat, Triasulfuron, Tribenzuron, Triclopyr, Tridiphan, Trietazin, Trifluralin, UB1-C4874, Vernolat.

Die erfindungsgemäße Biozidzusammensetzung kann weitere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung des pH-Werts, Duftstoffe, Dispergierhilfsmittel und Stabilisatoren, wie Puffer, Zinksalze, Zinkoxid und Komplexbildner.

Bei der praktischen Anwendung kann die Biozidzusammensetzung entweder als fertiges Gemisch oder durch getrennte Zugabe der Biozide und der übrigen Komponenten der Zusammensetzung in das zu konservierende mikrobiell anfällige System eingebracht werden. Im Allgemeinen liegt die Gesamtkonzentration der Biozide in dem zu konservierenden mikrobiell anfälligen System, wenn es sich dabei z.B. um Farben, Putze, Kunststoffe und Leder handelt, bei 0,01 bis 10 %. Werden die Biozide als Antifoulingwirkstoffe benutzt, beträgt ihre Gesamtkonzentration in dem zu konservierenden System 0,1 bis 50 %. Im Fall des Einsatzes der Biozide für den Holzschutz werden sie normalerweise mit einer Gesamtkonzentration von 0,1 bis 20 % benutzt. Diese Konzentrationsangaben beziehen sich jeweils auf das gesamte Gemisch aus dem zu konservierenden System und der Biozidzusammensetzung.

Die Beispiele erläutern die Erfindung.

Beispiel 1

Mit diesem Beispiel wird der Synergismus von Kombinationen aus Zinkpyrithion (ZnPy) und 2-n-Octylisothiazolin-3-on (OIT) in der erfindungsgemäßen Biozidzusammensetzung aufgezeigt.

Dazu wurden wässrige Gemische mit unterschiedlichen Konzentrationen an ZnPy und OIT hergestellt, und es wurde die Wirkung dieser Gemische auf Penicillium funiculosum DSM 12637 geprüft.

Die wässrigen Gemische enthielten außer der Biozidkomponente und Wasser noch ein Nährmedium, nämlich eine Sabouraud-Maltose-Bouillon (Handelsprodukt Merck Nr. 10393). Die Zelldichte betrug $10^6$ Keime/ml. Die Inkubationszeit war 96 h bei 25 °C. Jede Probe wurde mit 120 U/min auf einem Inkubationsschüttler bebrütet.

In der nachfolgenden Tabelle I sind die verwendeten Konzentrationen von ZnPy und OIT angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz von ZnPy allein ein MHK-Wert von 2 ppm und beim Einsatz von OIT allein ein MHK-Wert von 0,5 ppm. Dagegen sind die MHK-Werte der Gemische aus ZnPy und OIT deutlich niedriger, das heißt, diese Gemische wirken in ihrer Kombination synergistisch.

Tabelle I

MHK-Werte von ZnPy + OIT bezüglich Penicillium funiculosum DSM 12637 bei einer Inkubationszeit von 96 h/25 °C

| Konzentration ZnPy (ppm) | Konzentration OIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | + |
| 0,75 | - | - | - | - | - | - | - | - | - | + |
| 0,5 | - | - | - | - | - | - | - | - | + | + |
| 0,4 | - | - | - | - | - | - | - | - | + | + |
| 0,3 | - | - | - | - | - | - | - | + | + | + |
| 0,2 | - | - | - | - | - | - | + | + | + | + |
| 0,1 | - | - | - | - | - | + | + | + | + | + |
| 0 | - | - | - | - | - | + | + | + | + | + |

Der auftretende Synergismus wird mittels der in der Tabelle II berechneten Werte des Synergieindex zahlenmäßig dargestellt. Die Berechnung des Synergieindex nach der Methode von F. C. Kull et al., Applied Microbiology, Bd. 9 (1961), S. 538. Hier wird der Synergieindex mit der folgenden Formel berechnet:

$$\text{Synergieindex SI} = Q_a/Q_A + Q_b/Q_B.$$

Bei der Anwendung dieser Formel auf das hier geprüfte Biozidsystem haben die Größen in der Formel folgende Bedeutung:

$Q_a$ =    Konzentration von ZnPy im Biozidgemisch aus ZnPy und OIT

$Q_A$ =    Konzentration von ZnPy als einziges Biozid

$Q_b$ =    Konzentration von OIT im Biozidgemisch aus ZnPy und OIT

$Q_B$ =    Konzentration von OIT als einziges Biozid

Wenn der Synergieindex einen Wert von über 1 aufweist, bedeutet dies, dass ein Antagonismus vorliegt. Wenn der Synergieindex den Wert 1 annimmt, bedeutet dies, dass eine Addition der Wirkung der beiden Biozide gegeben ist. Wenn der Synergieindex einen Wert von unter 1 annimmt, bedeutet dies, dass ein Synergismus der beiden Biozide besteht.

Bei gleichzeitigem Einsatz von ZnPy und OIT trat ein Synergismus ein. Die Berechnung des Synergieindex ergibt sich aus der Tabelle II. Hiernach lag bei Penicillium funiculosum DSM 12637 der niedrigste Synergieindex (0,58) bei einem Gemisch aus 88,2 Gew.% ZnPy und 11,8 Gew.% OIT.

Tabelle II

Berechnung des Synergieindex von ZnPy + OIT bezüglich Penicillium funiculosum DSM 12637 bei einer Inkubationszeit von 96 h/25 °C

| MHK bei | | | Konzentration | | $Q_a/Q_A$ | $Q_b/Q_B$ | Synergie-index |
|---|---|---|---|---|---|---|---|
| ZnPy-Konzentration $Q_a$ (ppm) | OIT-Konzentration $Q_b$ ppm) | Gesamtkonzentration ZnPy + OIT $Q_a + Q_b$ (ppm) | ZnPy (Gew-%) | OIT (Gew. %) | | | $Q_a/Q_A$+ $Q_b/Q_B$ |
| 0 | 0,5 | 0,5 | 0,0 | 100,0 | 0,00 | 1,00 | 1,00 |
| 0,2 | 0,4 | 0,6 | 33,3 | 66,7 | 0,10 | 0,80 | 0,90 |
| 0,3 | 0,3 | 0,6 | 50,0 | 50,0 | 0,15 | 0,60 | 0,75 |
| 0,4 | 0,2 | 0,6 | 66,7 | 33,3 | 0,20 | 0,40 | 0,60 |
| 0,5 | 0,2 | 0,7 | 71,4 | 28,6 | 0,25 | 0,40 | 0,65 |
| 0,75 | 0,1 | 0,85 | 88,2 | 11,8 | 0,38 | 0,20 | 0,58 |
| 1 | 0,1 | 1,1 | 90,9 | 9,1 | 0,50 | 0,20 | 0,70 |
| 2 | 0 | 2 | 100,0 | 0,0 | 1,00 | 0,00 | 1,00 |

Beispiel 2

Ähnlich wie im Beispiel 1 wurde der Synergismus von ZnPy und OIT gegenüber dem Mikroorganismus Penicillium funiculosum IMI 211742 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle III sind die MHK-Werte der geprüften Biozidzusammensetzung ersichtlich. Der MHK-Wert beim Einsatz von ZnPy allein betrug 1 ppm und beim Einsatz von OIT allein 0,75 ppm.

Tabelle III

MHK-Werte von ZnPy + OIT bezüglich Penicillium funiculosum IMI 211742 bei einer Inkubationszeit von 72 h/25 °C

| Konzentration ZnPy (ppm) | Konzentration OIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | + |
| 0,75 | - | - | - | - | - | - | - | - | - | + |
| 0,5 | - | - | - | - | - | - | - | - | - | + |
| 0,4 | - | - | - | - | - | - | - | + | + | + |
| 0,3 | - | - | - | - | - | - | + | + | + | + |
| 0,2 | - | - | - | - | + | + | + | + | + | + |
| 0,1 | - | - | - | - | + | + | + | + | + | + |
| 0 | - | - | - | - | + | + | + | + | + | + |

Bei gleichzeitigem Einsatz von ZnPy und OIT trat ein Synergismus ein. Die Berechnung des Synergieindex ergibt sich aus der Tabelle IV. Hiernach lag bei Penicillium funiculosum IMI 211742 der niedrigste Synergieindex (0,63) bei einem Gemisch aus 83,3 Gew.% ZnPy und 16,7 Gew.% OIT.

Tabelle IV

Berechnung des Synergieindex von ZnPy + OIT bezüglich Penicillium funiculosum IMI 211742 bei einer Inkubationszeit von 72 h/25 °C

| MHK bei | | Gesamt-konzentration ZnPy + OIT $Q_a + Q_b$ (ppm) | Konzentration | | $Q_a/Q_A$ | $Q_b/Q_B$ | Synergie-index |
|---|---|---|---|---|---|---|---|
| ZnPy-Konzentration $Q_a$ (ppm) | OIT-Konzentration $Q_b$ ppm) | | ZnPy (Gew-%) | OIT (Gew.%) | | | $Q_a/Q_A + Q_b/Q_B$ |
| 0 | 0,75 | 0,75 | 0,0 | 100,0 | 0,00 | 1,00 | 1,00 |
| 0,3 | 0,5 | 0,8 | 37,5 | 62,5 | 0,30 | 0,67 | 0,97 |
| 0,3 | 0,4 | 0,7 | 42,9 | 57,1 | 0,30 | 0,53 | 0,83 |
| 0,4 | 0,3 | 0,7 | 57,1 | 42,9 | 0,40 | 0,40 | 0,80 |
| 0,5 | 0,2 | 0,7 | 71,4 | 28,6 | 0,50 | 0,27 | 0,77 |
| 0,5 | 0,1 | 0,6 | 83,3 | 16,7 | 0,50 | 0,13 | 0,63 |
| 0,75 | 0,1 | 0,85 | 88,2 | 11,8 | 0,75 | 0,13 | 0,88 |
| 1 | 0 | 1 | 100,0 | 0,0 | 1,00 | 0,00 | 1,00 |

Beispiel 3

Ähnlich wie im Beispiel 1 wurde der Synergismus von ZnPy und DCOIT gegenüber dem Mikroorganismus Penicillium funiculosum DSM 12637 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 96 h bei 25 °C. Jede Probe wurde mit 120 U/min auf einem Inkubationsschüttler bebrütet.

Aus der nachfolgenden Tabelle V sind die MHK-Werte der geprüften Biozidzusammensetzung ersichtlich. Der MHK-Wert beim Einsatz von ZnPy allein betrug 2 ppm und beim Einsatz von DCOIT allein 2 ppm.

Tabelle V

MHK-Werte von ZnPy + DCOIT bezüglich Penicillium funiculosum DSM 12637 bei einer Inkubationszeit von 96 h/25 °C

| Konzen-1 tration ZnPy (ppm) 1 | Konzentration DCOIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | + |
| 0,75 | - | - | - | - | - | - | - | - | - | + |
| 0,5 1 | - | - | - | - | - | - | - | - | + | + |
| 0,4 | - | - | - | - | - | - | - | + | + | + |
| 0,3 1 | - | - | - | - | - | + | + | + | + | + |
| 0,2 1 | - | - | - | + | + | + | + | + | + | + |
| 0,1 1 | - | - | + | + | + | + | + | + | + | + |
| 0 | - | - | + | + | + | + | + | + | + | + |

Bei gleichzeitigem Einsatz von ZnPy und DCOIT trat ein Synergismus ein. Die Berechnung des Synergieindex ergibt sich aus der Tabelle VI. Hiernach lag bei Penicillium funiculosum DSM 12637 der niedrigste Synergieindex (0,35) bei einem Gemisch aus 57,1 bis 71,4 Gew.% ZnPy und 42,9 bis 28,6 Gew.% DCOIT.

Tabelle VI

Berechnung des Synergieindex von ZnPy + DCOIT bezüglich Penicillium funiculosum DSM 12637 bei einer Inkubationszeit von 96 h/25 °C

| MHK bei | | | Konzentration | | $Q_a/Q_A$ | $Q_bQ_B$ | Synergie-index |
|---|---|---|---|---|---|---|---|
| ZnPy-Konzentration $Q_a$ (ppm) | DCOIT-Konzentration $Q_b$ ppm) | Gesamtkonzentration ZnPy + DCOIT $Q_a$ + $Q_b$ (ppm) | ZnPy (Gew-%) | DCOIT (Gew. %) | | | $Q_a/Q_A^+$ $Q_b/Q_B$ |
| 0 | 2 | 2 | 0,0 | 100,0 | 0,00 | 1,00 | 1,00 |
| 0,2 | 1 | 1,2 | 16,7 | 83,3 | 0,10 | 0,50 | 0,60 |
| 0,3 | 0,75 | 1,05 | 28,6 | 71,4 | 0,15 | 0,38 | 0,53 |
| 0,3 | 0,5 | 0,8 | 37,5 | 62,5 | 0,15 | 0,25 | 0,40 |
| 0,4 | 0,4 | 0,8 | 50,0 | 50,0 | 0,20 | 0,20 | 0,40 |
| 0,4 | 0,3 | 0,7 | 57,1 | 42,9 | 0,20 | 0,15 | 0,35 |
| 0,5 | 0,2 | 0,7 | 71,4 | 28,6 | 0,25 | 0,10 | 0,35 |
| 0,75 | 0,1 | 0,85 | 88,2 | 11,8 | 0,38 | 0,05 | 0,43 |
| 1 | 0,1 | 1,1 | 90,9 | 9,1 | 0,50 | 0,05 | 0,55 |
| 2 | 0 | 2 | 100,0 | 0,0 | 1,00 | 0,00 | 1,00 |

Beispiel 4

Ähnlich wie im Beispiel 1 wurde der Synergismus von ZnPy und DCOIT gegenüber dem Mikroorganismus Penicillium funiculosum IMI 211742 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle VII sind die MHK-Werte der geprüften Biozidzusammensetzung ersichtlich. Der MHK-Wert beim Einsatz von ZnPy allein betrug 0,75 ppm und beim Einsatz von DCOIT allein 1 ppm.

Tabelle VII

MHK-Werte von ZnPy + DCOIT bezüglich Penicillium funiculosum IMI 211742 bei einer Inkubationszeit von 72 h/25 °C

| Konzentration ZnPy (ppm) | Konzentration DCOIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | - |
| 0,75 | - | - | - | - | - | - | - | - | - | - |
| 0,5 | - | - | - | - | - | - | - | - | + | + |
| 0,4 | - | - | - | - | - | - | - | - | + | + |
| 0,3 | - | - | - | - | - | - | + | + | + | + |
| 0,2 | - | - | - | - | - | + | + | + | + | + |
| 0,1 | - | - | - | - | + | + | + | + | + | + |
| 0 | - | - | - | + | + | + | + | + | + | + |

Bei gleichzeitigem Einsatz von ZnPy und DCOIT trat ein Synergismus ein. Die Berechnung des Synergieindex ergibt sich aus der Tabelle VIII. Hiernach lag bei Penicillium funiculosum IMI 211742 der niedrigste Synergieindex (0,73) bei einem Gemisch aus 66,7 Gew.% ZnPy und 33,3 Gew.% DCOIT.

Tabelle VIII

Berechnung des Synergieindex von ZnPy + DCOIT bezüglich Penicillium funiculosum IMI 211742 bei einer Inkubationszeit von 72 h/25 °C

| MHK bei | | | Konzentration | | $Q_a/Q_A$ | $Q_b/Q_B$ | Synergie-index |
|---|---|---|---|---|---|---|---|
| ZnPy-Konzentration | DCOIT-Konzentration | Gesamt-konzentration ZnPy + DCOIT | ZnPy | DCOIT | | | |
| $Q_a$ (ppm) | $Q_b$ ppm) | $Q_a + Q_b$ (ppm) | (Gew-%) | (Gew.%) | | | $Q_a/Q_A +$ $Q_b/Q_B$ |
| 0 | 1 | 1 | 0,0 | 100,0 | 0,00 | 1,00 | 1,00 |
| 0,1 | 0,75 | 0,85 | 11,8 | 88,2 | 0,13 | 0,75 | 0,88 |
| 0,2 | 0,5 | 0,7 | 28,6 | 71,4 | 0,27 | 0,50 | 0,77 |
| 0,3 | 0,4 | 0,7 | 42,9 | 57,1 | 0,40 | 0,40 | 0,80 |
| 0,4 | 0,3 | 0,7 | 57,1 | 42,9 | 0,53 | 0,30 | 0,83 |
| 0,4 | 0,2 | 0,6 | 66,7 | 33,3 | 0,53 | 0,20 | 0,73 |
| 0,5 | 0,2 | 0,7 | 71,4 | 28,6 | 0,67 | 0,20 | 0,87 |
| 0,75 | 0 | 0,75 | 100,0 | 0,0 | 1,00 | 0,00 | 1,00 |

Beispiel 5

Ähnlich wie im Beispiel 1 wurde der Synergismus von ZnPy und DCOIT gegenüber dem Mikroorganismus Aspergillus niger DSM 1957 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle IX sind die MHK-Werte der geprüften Biozidzusammensetzungen ersichtlich. Der MHK-Wert beim Einsatz von ZnPy allein betrug 17,5 ppm und beim Einsatz von DCOIT allein 0,75 ppm.

Tabelle IX

MHK-Werte von ZnPy + DCOIT bezüglich Aspergillus niger DSM 1957 bei einer Inkubationszeit von 72 h/25 °C

| Konzen-1 tration ZnPy (ppm) | Konzentration DCOIT (ppm) | | | | | | | | | | | |
|---|---|---|---|---|---|---|---|---|---|---|---|---|
| | 5 | 4 | 3 | 2 | 1 | 0,75 | 0,5 | 0,4 | 0,3 | 0,2 | 0,1 | 0 |
| 20 1 | - | - | - | - | - | - | - | - | - | - | - | - |
| 17,5 | - | - | - | - | - | - | - | - | - | - | - | - |
| 15,0 | - | - | - | - | - | - | - | - | - | + | + | + |
| 12,5 | - | - | - | - | - | - | - | - | - | + | + | + |
| 10 | - | - | - | - | - | - | - | - | - | + | + | + |
| 7,5 | - | - | - | - | - | - | - | - | - | + | + | + |
| 5 | - | - | - | - | - | - | - | - | - | + | + | + |
| 4 | - | - | - | - | - | - | + | + | + | + | + | + |
| 3 | - | - | - | - | - | - | + | + | + | + | + | + |
| 2 | - | - | - | - | - | - | + | + | + | + | + | + |
| 1 | - | - | - | - | - | - | + | + | + | + | + | + |
| 0 | - | - | - | - | - | - | + | + | + | + | + | + |

Bei gleichzeitigem Einsatz von ZnPy und DCOIT trat ein Synergismus ein. Die Berechnung des Synergieindex ergibt sich aus der Tabelle X. Hiernach lag bei Aspergillus niger DSM 1957 der niedrigste Synergieindex (0,69) bei einem Gemisch aus 94,3 Gew.% ZnPy und 5,7 Gew.% DCOIT.

Tabelle X

Berechnung des Synergieindex von ZnPy + DCOIT bezüglich Aspergillus niger DSM 1957 bei einer Inkubationszeit von 72 h/25 °C

| MHK bei | | | Konzentration | | $Q_a/Q_A$ | $Q_b/Q_B$ | Synergie-index |
|---|---|---|---|---|---|---|---|
| ZnPy-Konzentration $Q_a$ (ppm) | Konzentration DCOIT- $Q_b$ ppm) | Gesamt-konzentration ZnPy + DCOIT $Q_a$ + $Q_b$ (ppm) | ZnPy (Gew-%) | DCOIT (Gew.%) | | | $Q_a/Q_A$+ $Q_b/Q_B$ |
| 0 | 0,75 | 0,75 | 0,0 | 100,0 | 0,00 | 1,00 | 1,00 |
| 1 | 0,5 | 1,5 | 66,7 | 33,3 | 0,06 | 0,67 | 0,72 |
| 2 | 0,5 | 2,5 | 80,0 | 20,0 | 0,11 | 0,67 | 0,78 |
| 3 | 0,5 | 3,5 | 85,7 | 14,3 | 0,17 | 0,67 | 0,84 |
| 4 | 0,5 | 4,5 | 88,9 | 11,1 | 0,23 | 0,67 | 0,90 |
| 5 | 0,4 | 5,4 | 92,6 | 7,4 | 0,29 | 0,53 | 0,82 |
| 5 | 0,3 | 5,3 | 94,3 | 5,7 | 0,29 | 0,40 | 0,69 |
| 7,5 | 0,3 | 7,8 | 96,2 | 3,8 | 0,43 | 0,40 | 0,83 |
| 10 | 0,3 | 10,3 | 97,1 | 2,9 | 0,57 | 0,40 | 0,97 |
| 17,5 | 0 | 17,5 | 100,0 | 0,0 | 1,00 | 0,00 | 1,00 |

**Patentansprüche**

1. Biozidzusammensetzung enthaltend als biozide Wirkstoffe (a) ein oder mehrere Pyrithione, (b) 2-n-Octylisothiazolin-3-on und/oder 4,5-Dichlor-2-n-octylisothiazolin-3-on und (c) ein oder mehrere Herbizide.

2. Biozidzusammensetzung nach Anspruch 1, **dadurch gekennzeichnet, dass** sie als Komponente (a) Zink-, Natrium-, Kupfer- und/oder Eisenpyrithion enthält.

3. Biozidzusammensetzung nach Anspruch 2, **dadurch gekennzeichnet, dass** sie als Komponente (a) nur Zinkpyrithion enthält.

4. Biozidzusammensetzung nach einem der Ansprüche 1 bis 3, **dadurch gekennzeichnet, dass** sie als Komponente (b) nur 2-n-Octylisothiazolin-3-on enthält.

5. Biozidzusammensetzung nach einem der Ansprüche 1 bis 3, **dadurch gekennzeichnet, dass** sie als Komponente (b) nur 4,5-Dichlor-2-n-octylisothiazolin-3-on enthält.

6. Biozidzusammensetzung nach einem der Ansprüche 1 bis 3, **dadurch gekennzeichnet, dass** sie als Komponente (b) ein Gemisch aus 2-n-Octylisothiazolin-3-on und 4,5-Dichlor-2-n-octylisothiazolin-3-on enthält.

7. Biozidzusammensetzung nach einem der Ansprüche 1 bis 6, **dadurch gekennzeichnet, dass** sie als Herbizid (c) ein oder mehrere Herbizid(e) ausgewählt aus Acetochlor, Acifluorfen, Aclonifen, Alachlor, Alloxydim, Ametryn, Amidosulfuron, Amitrol, Anilofos, Asulam, Atrazin, Aziprotryn, Benazolin, Benfluralin, Benfuresat, Bensulfuron, Bensulid, Bentazon, Chloridazon, Chlorimuron, Chlormethoxyfen, Chlornitrofen, Chlortoluron, Chlorxuron, Chlorprepham, Chlorsulfuron, Chlorthal, Chlorthiamid, Cinmethylin, Cinofulfuron, Clethodim, Clomazon, Clopyralid, Cyanamid, Cyanazin, Cycloat, Cycloxydim, Benzofencap, Benzthiazuron, Bifenox, Bilanafos, Bromacil, Brombutid, Bromfenoxim, Bromxynil, Butachlor, Butamifos, Butanachlor, Butralin, Butylat, Carbetamid, Chloramben, Chlorbromuron, Chlorbufam, Chlorflurenol, Difenoxuron, Difenzoquat, Diflufenican, Dimefuron, Dimepiperat, Dimethachlor, Dimethametryn, Dimethipin, Dinitramin, Dinosebacetat, Dinoseb, Dinoterb, Diphenamid, Dipropetryn, Diquat, Dithiopyr, Diuron, DNOC, Daimuron, Dalapon, Desmedipham, Desmetryn, Dicamba, Dichlobenil, Dichlorprop, Dichlorprop-P, Diclofop, Diethatyl, Flamprop-M, Flazasulfuron, Fluazifop, Fluazifop-P, Fluchloralin, Flumeturon, Fluorglycofen, Fluornitrofen, Flupropanat, Flurenol, Fluridon, Flurochloridon, Fluroxypyr, Fomosafen, Fusamin, Furyloxyfen, Glufosinat, Glyphosat, Haloxyfop, Hexazinon, Imazamethabenz, Imazapyr, Imazaquin, Imazethapyr, Ioxynil, Isopropalin, Isoproturon, Isouron, Isoxaben, Isoxapyrifop, Lactofen, Lenacil, Linuron, MCPA, Pebulat, Pendimethalin, Phenmedipham, Picloram, Piperophos, Pretilachlor, Primisulfuron; Prodiamin, Proglinazin, Prometon, Prometryn, Propachlor, Propanil, Propaquizafop, Propazin, Propham, Propyzamid, Prosulfocarb, Pyrazolynat, Pyrazosulfuron, Pyrazoxyfen, Pyributicarb, Pyridat, Quinclorac, Quinmerac, Quinoclamin, Quizalofop, Quizalofop-P, Eglinazin, Endothal, Epsorcarb, Ethalfluralin, Ethidimuron, Ethofumesat, Fenoxaprop, Fenoxaprop-P, Fenuron, Flamprop, Irgarol 1051, Mecoprop, Mecoprop-P, Mefenacet, Mefluidid, Metam, Metamitron, Metazachlor, Methabenzthiazuron, Methazol, Methoprotryn, Methyldymron, Metobromuron, Metolachlor, Metoxuron, Metribzin, Metsulfuron, Molinat, Monoalid, Monolinuron, Naproanilid, Napropamid, Naptalam, Neburon, Nicosulfuron, Nipyraclofen, Norflurazon, Orbencarb, Oryzalin, Oxadiazon, Oxyfluorfen, Paraquat, Prometryn, Simetryn, Sulfometuron, Tebutam, Tebuthiuron, Terbacil, Terbumeton, Terbuthylazin, Terbutryn, Thiazafluron, Thifensulfuron, Thiobencarb, Thiocarbazil, Tioclorim, Tralkoxydim, Triallat, Triasulfuron, Tribenzuron, Triclopyr, Tridiphan, Trietazin, Trifluralin, und Vernolat, enthält.

8. Biozidzusammensetzung nach einem der Ansprüche 1 bis 7, **dadurch gekennzeichnet, dass** sie als Herbizid (c) Terbutryn, Diuron, Irgarol und/oder Isoproturon enthält.

9. Biozidzusammensetzung nach einem der Ansprüche 1 bis 8, **dadurch gekennzeichnet, dass** sie das Pyrithion in einer Konzentration von 0,5 bis 99,5 Gew.-%, bezogen auf die gesamte Biozidzusammensetzung, enthält.

10. Biozidzusammensetzung nach einem der Ansprüche 1 bis 9, **dadurch gekennzeichnet, dass** sie das 2-n-Octylisothiazolin-3-on und/oder das 4,5-Dichlor-2-n-octylisothiazolin-3-on in einer Konzentration von 0,1 bis 99,9 Gew.-%, bezogen auf die gesamte Biozidzusammensetzung, enthält.

11. Biozidzusammensetzung nach einem der Ansprüche 1 bis 10, **dadurch gekennzeichnet, dass** sie das Pyrithion einerseits und das 2-n-Octylisothiazolin-3-on und/oder das 4,5-Dichlor-2-n-octylisothiazolin-3-on andererseits in einem Gewichtsverhältnis von 1 : 10 enthält.

12. Biozidzusammensetzung nach einem der Ansprüche 1 bis 11, **dadurch gekennzeichnet, dass** sie das Pyrithion und das 2-n-Octylisothiazolin-3-on und/oder das 4,5-Dichlor-2-n-octylisothiazolin-3-on in einer Gesamtkonzentration von 0,2 bis 100 Gew.-%, bezogen auf die gesamte Biozidzusammensetzung, enthält.

13. Biozidzusammensetzung nach einem der Ansprüche 1 bis 12, **dadurch gekennzeichnet, dass** sie übliche Zusatzstoffe in Form von Verdickungsmitteln, Entschäumern, Stoffen zur Einstellung des pH-Wertes, Duftstoffen, Dispergierhilfsmitteln und/oder Stabilisatoren enthält.

14. Verwendung einer Biozidzusammensetzung nach einem der Ansprüche 1 bis 13 als algizides und fungizides Mittel zur Konservierung von Beschichtungssystemen.

15. Verwendung nach Anspruch 14, wobei das Beschichtungssystem ausgewählt ist aus Farben, Lacken, Putzen, Antifoulinganstrichen, Kunststoffgegenständen, Wärmeübertragungsflüssigkeiten, Karton, Leder, Textilien und Holz.

16. Konserviertes Material, enthaltend eine Biozidzusammensetzung nach einem der Ansprüche 1 bis 13.

17. Konserviertes Material nach Anspruch 16, wobei das Material eine Farbe, ein Putz, ein Antifoulinganstrich, ein Kunststoffgegenstand, ein Karton, ein Leder, eine Textilie oder ein Holz ist.

| | Europäisches Patentamt<br>European Patent Office<br>Office européen des brevets | **EUROPÄISCHER RECHERCHENBERICHT** | **Nummer der Anmeldung**<br>EP 08 16 2324 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 492 811 A (ICI PLC)<br>1. Juli 1992 (1992-07-01)<br>* das ganze Dokument *<br>----- | | INV.<br>A01N43/40<br><br>ADD.<br>A01N43/80 |
| A | US 5 227 156 A (WIESE ROBERT S [US])<br>13. Juli 1993 (1993-07-13)<br>* das ganze Dokument *<br>----- | | |
| A | GB 1 560 476 A (LILLY CO ELI)<br>6. Februar 1980 (1980-02-06)<br>* das ganze Dokument *<br>----- | | |

**RECHERCHIERTE SACHGEBIETE (IPC)**

A01N

Der vorliegende Recherchenbericht wurde für alle Patentansprüche erstellt

| Recherchenort | Abschlußdatum der Recherche | Prüfer |
|---|---|---|
| München | 23. Januar 2009 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 16 2324

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2009

| Im Recherchenbericht angeführtes Patentdokument | Datum der Veröffentlichung | Mitglied(er) der Patentfamilie | Datum der Veröffentlichung |
|---|---|---|---|
| EP 0492811 A | 01-07-1992 | AU 639845 B2 | 05-08-1993 |
| | | AU 8880191 A | 25-06-1992 |
| | | BR 9105519 A | 01-09-1992 |
| | | CA 2057255 A1 | 21-06-1992 |
| | | FI 915975 A | 21-06-1992 |
| | | IE 914178 A1 | 01-07-1992 |
| | | JP 4295404 A | 20-10-1992 |
| | | NO 915031 A | 22-06-1992 |
| | | NZ 240843 A | 26-08-1993 |
| | | PT 99867 A | 31-12-1992 |
| | | ZA 9109625 A | 28-10-1992 |
| US 5227156 A | 13-07-1993 | JP 3432855 B2 | 04-08-2003 |
| | | JP 6009352 A | 18-01-1994 |
| GB 1560476 A | 06-02-1980 | BE 847314 A1 | 15-04-1977 |
| | | CS 195737 B2 | 29-02-1980 |
| | | DE 2646212 A1 | 28-04-1977 |
| | | FR 2327730 A1 | 13-05-1977 |
| | | GR 63120 A1 | 11-09-1979 |
| | | IL 50581 A | 25-07-1979 |
| | | IT 1070934 B | 02-04-1985 |
| | | JP 52051024 A | 23-04-1977 |
| | | NL 7611459 A | 19-04-1977 |
| | | PL 100905 B1 | 30-11-1978 |
| | | PL 105807 B1 | 30-11-1979 |
| | | RO 70923 A1 | 01-02-1983 |

EPO FORM P0461

Für nähere Einzelheiten zu diesem Anhang : siehe Amtsblatt des Europäischen Patentamts, Nr.12/82

**EP 2 033 519 A1**

## IN DER BESCHREIBUNG AUFGEFÜHRTE DOKUMENTE

### In der Beschreibung aufgeführte Patentdokumente

- US 5562995 A
- US 5883154 A
- EP 0676140 A1
- JP 4353836 A
- JP 5099195 A
- US 5464622 A
- WO 9821962 A

### In der Beschreibung aufgeführte Nicht-Patentliteratur

- **F. C. KULL et al.** *Applied Microbiology,* 1961, vol. 9, 538